# EUROPEAN PATENT APPLICATION

(11) **EP 2 375 026 A1**
(43) Date of publication of application: **12.10.2011**
(21) Application number: 11159923.9
(22) Date of filing: 25.03.2011
(51) Int. Cl.: F01P 5/12, F16D 13/08, F16D 13/12

(54) **Disengageable pulley unit to preferably drive an accessory device of an internal combustion engine**

(30) Priority: 25.03.2010 IT TO20100234
(71) Applicant: Dayco Europe S.R.L., Chieti (IT)
(72) Inventor: Cariccia, Gianluca, 66100 Chieti (IT); Pasta, Massimo, 10138 Torino (IT)
(74) Representative: Jorio, Paolo

(57) **Abstract**

A pulley assembly (1) comprises a pulley (2) adapted to be driven by a flexible endless member, a bearing (3) radially supporting the pulley (2), a pin (12) rotationally fixed to the pulley (2), a band spring (20) wound at least partially about said pin (12) and having a first end portion fixed with respect to the pulley (2), a driving device (5) comprising an actuator (14) which is axially mobile with respect to said pulley (2). The pulley also comprises a cylindrical cam (19) connected to said actuator (14) so as to relatively rotate with respect to the pulley (2) when the actuator (14) moves axially, the band spring (20) comprising a second end portion connected to the cylindrical cam (19) and adapted to be selectively coupled to a rotating shaft (7).

## Description

The present invention relates to a controllably disengageable pulley unit to preferably drive an accessory device, for example a water pump, of an internal combustion engine.

It is known to associate a controllably disengageable pulley unit to a belt drive of an internal combustion engine to drive a water pump of an internal combustion engine. When the pulley unit is disengaged, the water pump is not driven by the belt drive. Vice versa, when the pulley unit is engaged, the water pump is driven by the belt drive and the refrigerant keeps the internal combustion engine at a controlled temperature.

It is also known to associate to a disengageable pulley unit an automatic drive connected to a control unit of the internal combustion engine to control the disengagement of the water pump from the drive and thereby carry out control strategies of transients of the temperature variation of the engine.

A control strategy requires a high number of coupling cycles, each of which comprises the engagement and the disengagement of the pulley. Furthermore, these cycles are carried out under inertial and friction load mostly represented by the pump rotor.

This poses the issue of the reliability of the pulley unit which must be extremely high as the water pump is pivotal for the operation of the internal combustion engine. In particular, the disengageable pulley unit comprises elements moving relatively to one another which can wear out during each coupling cycle.

It is an object of the present invention to provide an improved disengageable pulley unit to control an accessory device of an internal combustion engine.

The object of the present invention is achieved by means of a pulley unit according to claim 1.

For a better understanding of the present invention, a preferred embodiment thereof will now be disclosed by mere way of non-limitative example and with reference to the accompanying drawings, in which:
- figure 1 is a section view of a pulley assembly according to the present invention; and
- figure 2 is a perspective view of an enlarged detail of figure 1.

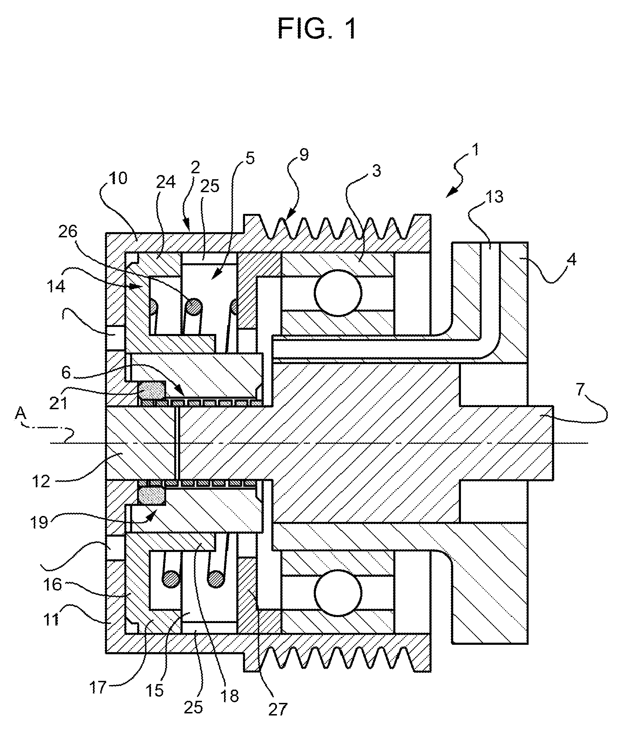

Figure 1 shows as a whole a pulley unit comprising a pulley 2 adapted to be connected to a flexible endless member, for example a poly-V belt, of an endless drive, of an internal combustion engine, a bearing 3 to radially support pulley 2 on a pump body 4, a driving device 5 preferably a fluidic driving device housed within pulley 2 and a disengageable joint 6 driven by said driving device 5 and interposed between pulley 2 and a shaft 7 connected to a rotor (not shown) of pump body 4.

In particular, bearing 3 is axially arranged substantially in-line with a working surface 9 of pulley 2 which cooperates with the flexible endless member, for example frictionally, and faces driving device 5. Pulley 2 comprises a cylindrical wall 10 defining working surface 9 which is concentrical to bearing 3, a side wall 11 extending from cylindrical wall 10 towards an axis A of bearing 3 and a support pin 12 connected rigidly to side wall 11 towards shaft 7 and coaxial to axis A.

Driving device 5 is surrounded by cylindrical wall 10 and is interposed between bearing 3 and side wall 11. Driving device 5 comprises a duct 13 defined by pump body 4 and an axially mobile actuator 14 guided by an inner surface of cylindrical wall 10.

In particular, duct 13 extends longitudinally beyond bearing 3 and leads to a compartment 15 housing actuator 14 and disengageable joint 6; and externally defined by cylindrical wall 10 and by side wall 11. Actuator 14 comprises a disc 16 substantially transversal to axis A, a peripheral cylindrical edge 17 contacting cylindrical wall 10 to guide the axial movement and a tubular portion 18 releasably connected to shaft 7 by disengageable joint 6.

Disengageable joint 6 comprises a cylindrical cam 19 borne by pulley 2, a band spring 20 to connect shaft 7 to pulley 2 and a fixing ring 21 to fix an end portion of band spring 20 (figure 1) to pin 12, the other end portion of spring 20 being fixed to cylindrical cam 19.

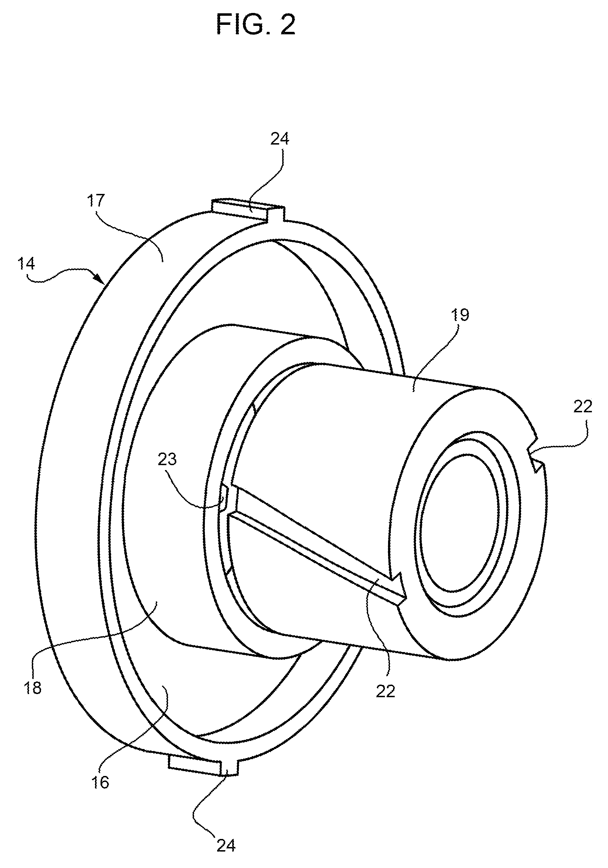

In particular (figure 2), cylindrical cam 19 defines a pair of grooves 22 coupling with respective protrusions 23 (only one of which is shown) borne by tubular portion 18 and facing axis A. Thereby, actuator 14 and cylindrical cam 19 are coupled so as to follow a roto-translational movement and so that cylindrical cam 19 can rotate relatively with respect to pulley 2. For this purpose, peripheral edge 17 defines a pair of preferably diametrical projections 24 which engage respective rectilinear guides 25 parallel to axis A and fixed with respect to pulley 2.

Cylindrical cam 19 also defines a through hole within which band spring 20, a portion of pin 12 and a portion of shaft 7 are housed, the two latter portions being surrounded by band spring 20.

Furthermore, actuator 14 is maintained in an end-stop position against side wall 11 by means of a helical spring 26 housed in compartment 15 and contacting on one side disc 16 and on the other side a fifth wheel 27 preferably resting on the outer ring of bearing 4.

The operation of pulley unit 1 is as follows.

When actuator 14 is not activated, disc 16 is pressed against side wall 11 by spring 26 and is frictionally integral with pulley 2. In these conditions, band spring 20 has a helix angle such as to tend to wind about pin 12 and shaft 7 so as to transmit torque between pulley 2 and the shaft.

When actuator 14 is activated by a depression induced in compartment 15 by means of duct 13, disc 16 separates from side wall 11 and moves rectilinearly by means of guides 25. Simultaneously, cylindrical cam 19 rotates with respect to pulley 2 in a direction such as to unwind the coils of band spring 20. This leads to the disengagement of band spring 20 from shaft 7 which can thus stop with respect to pulley 2 due to frictions. According to this embodiment, actuator 14, band spring 20 and cylindrical cam 19 are rotated by pulley 2.

When this angular coupling between pulley 2 and shaft 7 must be recovered, the depression in compartment 15 is eliminated so that ambient pressure may return by dedicated holes 28 for example defined by side wall 11. Spring 26 presses disc 16 again against side wall 11 and rotates cylindrical cam 19. The latter also rotates in an opposite direction that tends to wind the coils of band spring 20 about shaft 7. In particular, the opposite rotation generates a relative rotation between the end portion of spring 20 which is fixed with respect to cylindrical cam 19.

The advantages of pulley unit 1 disclosed and shown herein are the following.

A relative rotation of the end portions of band spring 20 can be easily generated by cylindrical cam 19. Therefore, a device disengageable with band spring may be adapted to pneumatic actuation, according to which only stops integral with pulley 2 can conveniently be arranged to limit the stroke of actuator 14.

Pulley unit 1 has a particularly compact axial size even incorporating actuator 14 therein.

In particular, a pulley unit according to the present invention has been tested for a duration of more than 1000000 cycles during which the temperature varies between -40° and + 130°; and allows to reduce the sound emissions during the life cycle at a level lower than 20 Sones.

It is finally apparent that pulley unit 1 disclosed and shown herein may be modified or varied without therefore departing from the scope of protection as specified in the appended claims.

For example, actuator 14 can be activated by an overpressure within compartment 15. In this case spring 26 must be interposed between side wall 11 and actuator 14 which in the resting position comes into contact with fifth wheel 27, also rotationally integral with pulley 2. The winding angle of band spring 20 and grooves 22 must be modified accordingly to define an engaged configuration when actuator 14 comes into contact with fifth wheel 27 pushed by spring 26 and a disengaged configuration when the overpressure generated by the fluid separates actuator 14 from fifth wheel 27 and cylindrical cam 19 rotates relatively to pulley 2.

Furthermore, pulley unit 1 can also be driven hydraulically, in particular when it is configured to be activated by an overpressure. The use of a hydraulically driven pulley unit provides the connection with a synchronous flexible endless member in a timing drive that functions in the continuous presence of oil. In this case, a seal is applied to the fifth wheel to ensure pressurisation of pulley 2. The continuous presence of oil is ensured in this embodiment by the fact that the drive comprises devices to spray oil on the pulley and/or on the chain/belt or that at least one portion of the flexible endless member is immersed in an amount of oil which is distributed on the drive by ventilating effect when the internal combustion engine is in use.

Pin 12 can also be covered by a layer (not shown) that can be made according to various techniques so as to allow a static friction coefficient between pin 12 and band spring 20 in the range between 0.07 and 0.25 and substantially constant even for a high number of cycles, for example more than one million, so as to satisfy the reliability standards required by motor vehicle manufacturers.

This layer is borne by pin 12 and is therefore fixed and less prone to elongations which can compromise the structure and integrity during the life cycle of the pulley unit and the corresponding engagement-disengagement cycles. Preferably, the layer is coupled to pin 12 by shape uncoupling suitable to transmit high torsional loads.

Furthermore, the friction coefficient is measured by a rotative apparatus.

## Claims

1. A pulley assembly (1) comprising a pulley (2) adapted to be driven by a flexible endless member, a bearing (3) radially supporting said pulley (2), a pin (12) rotationally fixed to said pulley (2), a band spring (20) wound at least partially about said pin (12) and having a first end portion fixed with respect to said pulley (2), a driving device (5) comprising an actuator (14) which is axially mobile with respect to said pulley (2), **characterised by** comprising a cylindrical cam (19) connected to said actuator (14) so as to relatively rotate with respect to said pulley (2) when said actuator (14) moves axially, said band spring (20) comprising a second end portion connected to said cylindrical cam (19) and adapted to be selectively coupled to a rotating shaft (7).

2. The unit according to claim 1, **characterised in that** said pulley (2) defines at least one rectilinear guide (25) coupled to said actuator (14) to lock the rotation of the latter with respect to said pulley (2).

3. The unit according to any of the preceding claims, **characterised in that** said cylindrical cam (19) houses at least partially said pin (12) and said band spring (20).

4. The unit according to any of the preceding claims, **characterised in that** at least one of said pin (12) and band spring (20) comprises a superficial layer made of a friction material.

5. The unit according to claim 4, **characterised in that** said layer is borne by said pin (12).

6. The unit according to claim 5, **characterized in that** said layer is coupled to said pin by means of a shape coupling.

7. The unit according to claim 6, **characterized in that** said layer has a static friction coefficient comprised between 0.07 and 0.25.

8. The unit according to any of the preceding claims, **characterised in that** said actuator (14) and said cylindrical cam (19) are axially arranged between said bearing (3) and a side wall (11) of said pulley (2).

9. The unit according to any of the preceding claims, **characterised in that** said pulley (2) defines at least one hole (26) for outletting an actuation fluid of said actuator (14).

10. A hydraulic pump body (4) for an internal combustion engine comprising a shaft (7) and a pulley unit according to any of the preceding claims connected to said shaft (7), and defining a duct (13) for a fluid adapted to actuate said actuator (14), said duct (13) being radially interposed between said bearing (3) and said shaft (7).
